# EUROPEAN PATENT APPLICATION

(11) **EP 4 716 191 A1**
(43) Date of publication of application: **25.03.2026**
(21) Application number: 24830656.5
(22) Date of filing: 21.06.2024
(51) Int. Cl.: H04L 67/141

(54) **NODE ACCESS METHOD AND APPARATUS, AND ELECTRONIC APPARATUS**

(30) Priority: 28.06.2023 CN 202310781501
(71) Applicant: ZTE CORPORATION, Shenzhen, Guangdong 518057 (CN)
(72) Inventor: JIN, Hao, Shenzhen, Guangdong 518057 (CN); TU, Yaofeng, Shenzhen, Guangdong 518057 (CN); HAN, Yinjun, Shenzhen, Guangdong 518057 (CN); CHEN, Zhenghua, Shenzhen, Guangdong 518057 (CN); GUO, Bin, Shenzhen, Guangdong 518057 (CN)
(74) Representative: Mozzi, Matteo
(86) International application number: PCT/CN2024/100763
(87) International publication number: WO 2025/002011

(57) **Abstract**

Embodiments of the present disclosure provide a node access method and apparatus, and an electronic apparatus. The method includes: extending a first access client by using kernel extension technology to obtain a second access client, wherein the second access client includes a kernel mode program which is used for determining a plurality of first virtual sub-clients corresponding to the second access client; and accessing distributed storage nodes by means of the plurality of first virtual sub-clients. By means of the technical solution above, the problem in the related art that existing NVME clients cannot concurrently access a plurality of storage nodes in distributed storage is solved.

## Description

### Cross-Reference to Related Application

The present disclosure claims priority to Chinese Patent Application No. 2023107815017, filed to the China National Intellectual Property Administration on June 28, 2023 and entitled "Node Access Method and Apparatus, and Electronic Apparatus", which is incorporated herein by reference in its entirety.

### Technical Field

The present disclosure relates to the field of communications, and in particular, to a node access method and apparatus, and an electronic apparatus.

### Background

Currently, distributed storage systems provide customized client interfaces by default. Client nodes simultaneously access metadata servers and data servers to acquire the data distribution across the entire storage space. The client proxies all external requests and selects target storage nodes through relevant allocation algorithms to complete the actual read and write operations. The application layer does not need to understand the internal details of the storage cluster, thereby achieving high-performance concurrent access capabilities to the storage cluster. However, the customized client interfaces of storage clusters are difficult to efficiently integrate into the existing Operating System (OS) kernel storage processes. Application layer software requires corresponding adaptation modifications to access the storage, which greatly limits the promotion and application of distributed storage systems. Therefore, distributed storage clusters generally integrate their customized block storage into the Linux kernel by means of kernel modules such as Non-Volatile Memory Express over Fabrics (NVMe-oF) and Network Block Device (nbd).

The nbd module provides a unified approach for Linux systems to access remote storage devices. Each nbd client establishes a connection with a dedicated nbd server and maps the remote storage device to the client's local system. This approach, however, has two drawbacks: first, the client can access only one nbd server, after which the nbd server handles request forwarding, causing the performance upper limit to heavily depend on the forwarding capabilities of the nbd server; second, modifying the kernel module is difficult, as it requires recompiling the kernel and is strictly bound to the kernel version. The RADOS Block Device (RBD) implemented in the Ceph Distributed File System (Ceph) has a similar implementation mechanism to nbd, and the client must introduce an additional kernel module to implement the RADOS protocol, with the strong binding to the OS kernel limiting the application scenarios. The Elastic Block Storage (EBS) system implements remote access based on the nbd module but does not address the defects inherent in the nbd module.

With the emergence of new-generation storage media represented by Solid State Drive (SSD) flash memory, distributed storage systems provide standard block storage devices externally through the NVMe-oF protocol, enabling massive data storage for services such as databases, big data, and cloud computing. However, an NVMe client by default establishes a connection with one NVMe-oF Target service and accesses the remote distributed storage via this connection. As a result, a single NVMe-oF channel becomes a read/write bottleneck for the distributed storage cluster. The MultiPath function supported by the NVMe-oF protocol enables the capability to access the same Target service through multiple network connections, avoiding the risk of single-node failures at the network layer, but it cannot concurrently access multiple storage nodes in the distributed storage, making it difficult to fully utilize the access performance of the storage system.

To address the problem in the related art that existing NVMe clients cannot concurrently access multiple storage nodes in distributed storage, no effective solution has yet been proposed.

Therefore, it is necessary to improve the related art to overcome the defect in the related art.

### Summary

Embodiments of the present disclosure provide a node access method and apparatus, and an electronic apparatus, so as to at least solve the problem that existing NVME clients cannot concurrently access multiple storage nodes in distributed storage.

According to one aspect of embodiments of the present disclosure, there is provided a node access method, including: a first access client is extended by using kernel extension technology to obtain a second access client, wherein the second access client includes a kernel mode program which is used to determine a plurality of first virtual sub-clients corresponding to the second access client; and distributed storage nodes are accessed by means of the plurality of first virtual sub-clients.

In some exemplary embodiments, before distributed storage nodes are accessed by means of the plurality of first virtual sub-clients, the method further includes: in a case where the second access client further includes a user mode program, a second virtual sub-client corresponding to the second access client is determined according to the user mode program; and a metadata storage node is accessed by means of the second virtual sub-client to acquire metadata information in the metadata storage node.

In some exemplary embodiments, the metadata storage node is accessed by means of the second virtual sub-client to acquire metadata information in the metadata storage node, includes: a timer is set for the second virtual sub-client; and metadata information in the metadata storage node within a timing length is determined according to the timing length of the timer.

In some exemplary embodiments, before distributed storage nodes are accessed by means of the plurality of first virtual sub-clients, the method further includes: connections are established between the plurality of first virtual sub-clients and the distributed storage nodes respectively, wherein the connections are established by means of metadata information, and wherein the metadata information is acquired by a second access client from a metadata storage node.

In some exemplary embodiments, distributed storage nodes are accessed by the plurality of first virtual sub-clients, includes: a read/write request sent by a block device is parsed by the second access client, so as to obtain a target address; a target node corresponding to the target address is determined by using an address mapping algorithm; and the read/write request is sent to the target node, wherein the read/write request is sent by means of a first virtual sub-client connected to the target node.

In some exemplary embodiments, a target node corresponding to the target address is determined using an address mapping algorithm, includes: a hash value corresponding to the target address is determined using the address mapping algorithm; and the target node corresponding to the hash value is determined according to metadata information, wherein the metadata information is used for indicating a correlation between the hash value and the target node.

In some exemplary embodiments, after the read/write request is sent to the target node, the method further includes: a response result fed back by a response node is received, wherein the response result is a response result fed back by the response node based on the read/write request, and the response node includes one of the following: a target node and an actual node, wherein the actual node is a node to which the read/write request actually belongs in a case where the read/write request does not belong to the target node; the response result is parsed to obtain a response address of the response result; and in a case where the response address is different from the target address, a metadata storage node is accessed at a moment next to a current moment, so as to acquire latest metadata information in the metadata storage node.

In some exemplary embodiments, the plurality of first virtual sub-clients include at least one of: a plurality of first virtual sub-clients determined based on a first data transfer protocol; one first virtual sub-client determined based on the first data transfer protocol and a plurality of third virtual sub-clients determined based on a second data transfer protocol.

In some exemplary embodiments, the read/write request is sent to the target node, includes: in a case where the virtual sub-clients are the third virtual sub-clients, the read/write request is transmitted to the third virtual sub-clients via the first virtual sub-clients; and the read/write request is converted into a read/write request based on the second data transfer protocol by means of the third virtual sub-clients, and the read/write request based on the second data transfer protocol is sent to the target node. The response message corresponding to the request is forwarded to the first virtual client, and the first virtual client completes this read/write operation.

According to another aspect of the embodiments of the present disclosure, there is further provided a node access apparatus, including: an extension module, configured to extend a first access client by using kernel extension technology to obtain a second access client, wherein the second access client includes a kernel mode program, and the kernel mode program is used for determining a plurality of first virtual sub-clients corresponding to the second access client; and an access module, configured to access distributed storage nodes by means of the plurality of first virtual sub-clients.

According to yet another aspect of the embodiments of the present disclosure, there is further provided a computer-readable storage medium storing a computer program, wherein the computer program is configured to implement the node access method above when executing.

According to yet another aspect of the embodiments of the present disclosure, there is further provided an electronic apparatus, including a memory, a processor and a computer program stored in the memory and executable on the processor, wherein the processor implements the node access method above via the computer program.

By means of the present disclosure, a first access client is extended by using kernel extension technology to obtain a second access client, wherein the second access client includes a kernel mode program which is used to determine a plurality of first virtual sub-clients corresponding to the second access client; and distributed storage nodes are accessed by means of the plurality of first virtual sub-clients. That is to say, the first access client is extended using the kernel extension technology to obtain the second access client capable of accessing the distributed storage nodes by the plurality of first virtual sub-clients, thereby solving the technical problem that existing NVMe clients cannot concurrently access the plurality of storage nodes in the distributed storage. The technical effect of concurrent access to distributed storage nodes is achieved.

### Brief Description of the Drawings

The drawings illustrated herein are used for providing further understanding of the present disclosure and constitute a part of the present disclosure, and the exemplary embodiments of the present disclosure and illustrations thereof are used for explaining the present disclosure, rather than constituting inappropriate limitation on the present disclosure. In the drawings:
Fig. 1 is a structural block diagram of hardware of a computer terminal of a node access method according to embodiments of the present disclosure;
Fig. 2 is a flowchart of a node access method according to embodiments of the present disclosure;
Fig. 3 is a schematic diagram of a control plane and a data plane of a node access method according to embodiments of the present disclosure;
Fig. 4 is a schematic diagram (I) of a second access client of a node access method according to embodiments of the present invention;
Fig. 5 is a schematic diagram of connection establishment of a node access method according to embodiments of the present disclosure;
Fig. 6 is a read/write flowchart of a node access method according to embodiments of the present disclosure;
Fig. 7 is a flowchart of active updating of metadata in a node access method according to embodiments of the present disclosure;
Fig. 8 is a flowchart of passive update of metadata in a node access method according to embodiments of the present disclosure;
Fig. 9 is a schematic diagram (II) of a second access client of a method for accessing a node according to embodiments of the present disclosure; and
Fig. 10 is a structural block diagram of a node access apparatus according to embodiments of the present disclosure.

### Detailed Description of the Embodiments

In order to enable a person skilled in the art to understand the solutions of the present disclosure better, hereinafter, the technical solutions in the embodiments of the present disclosure will be described clearly and thoroughly with reference to the accompanying drawings of embodiments of the present disclosure. Obviously, the embodiments as described are only some of embodiments of the present disclosure, and are not all the embodiments. On the basis of the embodiments in the present disclosure, all other embodiments obtained by a person of ordinary skill in the art without any inventive effort shall all fall within the scope of protection of the present disclosure.

It should be noted that the terms "first", "second", etc. in the description, claims and drawings of the present disclosure are used to distinguish similar objects, and are not necessarily used to describe a specific sequence or a precedence order. It should be understood that the data so used may be interchanged where appropriate so that embodiments of the present disclosure described herein may be implemented in sequences other than those illustrated or described herein. In addition, the terms "include" and "have" and any variations thereof are intended to cover a non-exclusive inclusion, for example, a process, method, system, product or device which includes a series of steps or units is not necessarily limited to those steps or units that are clearly listed, but may include other steps or units that are not clearly listed or inherent to these process, method, product or device.

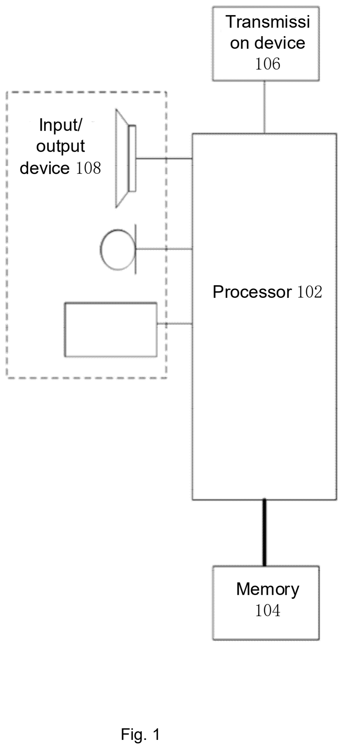

The method embodiments provided in the embodiments of the present disclosure can be executed in a computer terminal or a similar computing apparatus. By taking running on a computer terminal as an example, Fig. 1 is a structural block diagram of hardware of a computer terminal of a node access method according to embodiments of the present disclosure. As shown in Fig. 1, the computer terminal may include one or more (only one shown in Fig. 1) processors 102 (the processors 102 may include but are not limited to a Microprocessor Unit (MPU) or a Programmable logic device (PLD)), and a memory 104 used for storing data. In some exemplary embodiments, the computer terminal can further include a transmission device 106 and an input/output device 108 for communication functions. A person of ordinary skill in the art would understand that the structure shown in Fig. 1 is merely exemplary, and does not limit the structure of the computer terminal. For example, the computer terminal may further include more or fewer assemblies than those shown in Fig. 1, or have equal functions as those shown in Fig. 1 or different configurations having more functions than those as shown in Fig. 1.

The memory 104 may be used for storing a computer program, for example, a software program and module of application software, such as a computer program corresponding to the node access method in embodiments of the present disclosure. The processor 102 executes various functional applications and data processing by running the computer program stored in the memory 104, i.e. implementing the described method. The memory 104 may include a high-speed random access memory, and may further include a non-transitory memory, such as one or more magnetic storage apparatuses, flash memories or other non-transitory solid-state memories. In some examples, the memory 104 may further include memories remotely arranged with respect to the processors 102, and these remote memories may be connected to the computer terminal via a network. Examples of the network include, but not limited to the Internet, an intranet, a local area network, a mobile communication network and combinations thereof.

The transmission device 106 is configured to receive or send data via a network. Specific examples of the network may include a wireless network provided by a communication provider of the computer terminal. In one example, the transmission device 106 includes a network adapter (Network Interface Controller, NIC) which may be connected to other network devices by means of a base station, so as to communicate with the Internet. In one example, the transmission device 106 may be a Radio Frequency (RF) module which is configured to communicate with the Internet in a wireless manner.

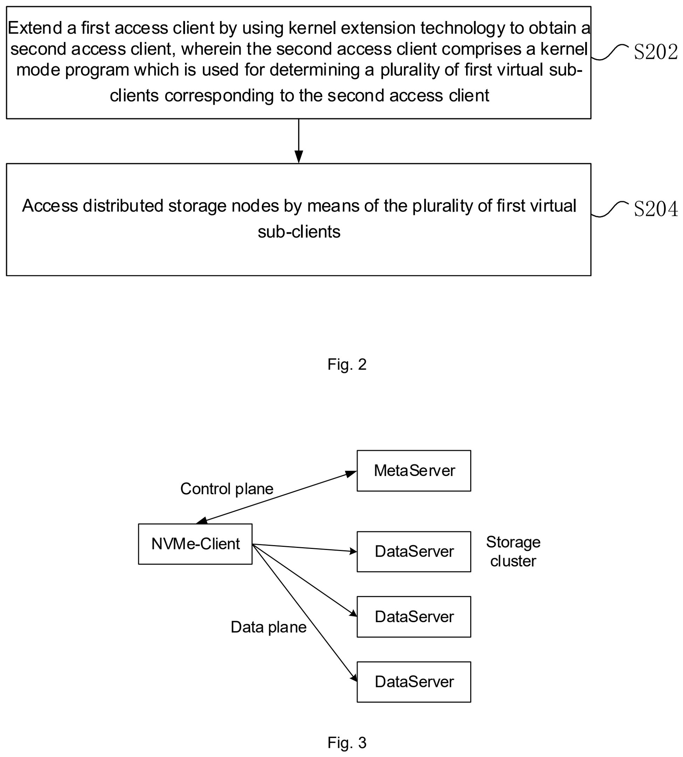

Fig. 2 is a flowchart of a node access method according to embodiments of the present disclosure, which is applied to the computer terminal above. As shown in Fig. 2, the method includes the following steps:
step S202, a first access client is extended by using kernel extension technology to obtain a second access client, wherein the second access client includes a kernel mode program which is used for determining a plurality of first virtual sub-clients corresponding to the second access client.

Optionally, the kernel extension technology used in the embodiments of the present disclosure includes, but is not limited to, a novel kernel extension technology (extended Berkeley Packet Filter, eBPF). The eBPF provides a mechanism for securely injecting an extension code when a kernel event and a user program event occur, and is widely applied in fields such as cloud native, performance optimization, and hardware acceleration.

Step S204, distributed storage nodes are accessed by means of the plurality of first virtual sub-clients.

According to the embodiments of the present disclosure, by means of the described steps, a first access client is extended by using kernel extension technology to obtain a second access client, wherein the second access client includes a kernel mode program which is used to determine a plurality of first virtual sub-clients corresponding to the second access client; and distributed storage nodes are accessed by means of the plurality of first virtual sub-clients. That is to say, the first access client is extended using the kernel extension technology to obtain the second access client capable of accessing the distributed storage nodes by the plurality of first virtual sub-clients, thereby solving the technical problem that existing NVMe clients cannot concurrently access the plurality of storage nodes in the distributed storage. The technical effect of concurrent access to distributed storage nodes is achieved.

In some exemplary embodiments, before distributed storage nodes are accessed by means of the plurality of first virtual sub-clients, the method further includes: in a case where the second access client further includes a user mode program, a second virtual sub-client corresponding to the second access client is determined according to the user mode program; and a metadata storage node is accessed by means of the second virtual sub-client, so as to acquire metadata information in the metadata storage node.

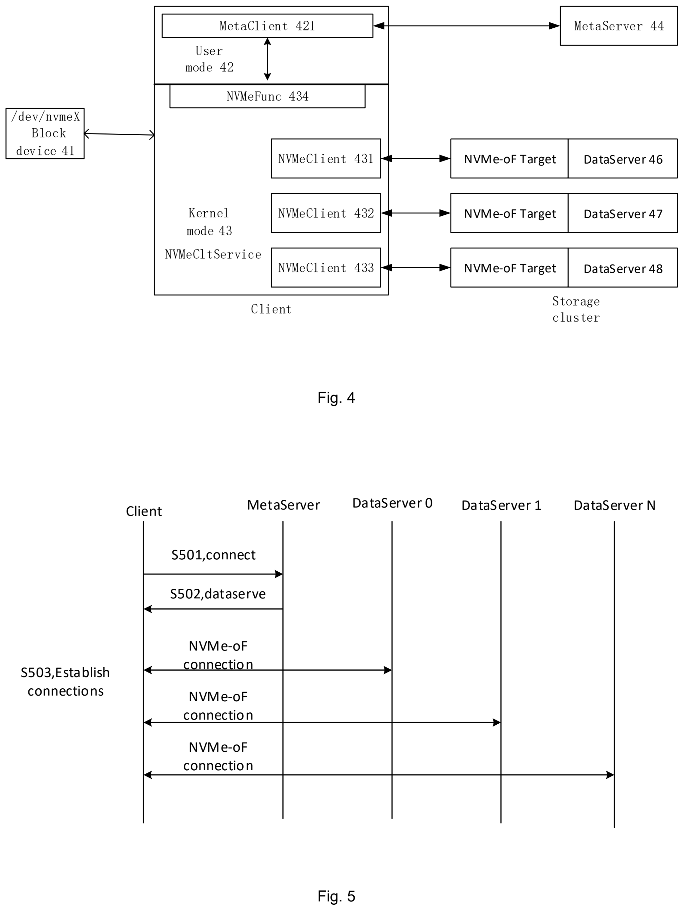

It can be understood that, in the embodiments of the present disclosure, the distributed storage client function is injected into the NVMe client workflow by means of the kernel extension technology, so that connections can be established between the NVMe client and all the nodes of the storage cluster. Specifically, the extended NVMe client maintains two networks of a control plane and a data plane at the same time. As shown in Fig. 3, the data plane establishes connections with a plurality of distributed storage nodes via a plurality of first virtual sub-clients. As shown in Fig. 4, the first virtual sub-clients are equivalent to the NVMeClient 431, 432, and 433 in Fig. 4, and the first virtual sub-clients and the distributed storage nodes may be in a one-to-one maintenance relationship, i.e. one first virtual sub-client is connected to one distributed storage node; or may also be a one-to-many maintenance relationship, i.e. one first virtual sub-client is connected to a plurality of distributed storage nodes. However, in a case of one-to-many, the number of distributed storage nodes connected to the first virtual sub-clients should be less than a quantity threshold, wherein the quantity threshold is the number of distributed storage nodes that can be connected by the first virtual sub-client at most, if the number of distributed storage nodes connected to the first virtual sub-client exceeds the quantity threshold, the IO read/write request may not be forwarded in a timely manner. The data plane is maintained by a second virtual sub-client determined by the user mode program, the second virtual sub-client is equivalent to the MetaClient in Fig. 4, and the second virtual sub-client may access a metadata storage node and acquire metadata information in the metadata node.

In some exemplary embodiments, a metadata storage node is accessed by means of the second virtual sub-client, so as to acquire metadata information in the metadata storage node, includes: a timer is set for the second virtual sub-client; and metadata information in the metadata storage node within a timing length is determined according to the timing length of the timer.

That is, in order to enable the second access client to acquire the change condition of the metadata information of the distributed storage cluster, the metadata storage node may be intermittently accessed by the second virtual sub-client under certain restriction conditions. The certain restriction conditions include timing and/or quantitativeness, and the specific method includes: in a first method, a timer is set for periodically acquiring metadata information about the metadata storage node within a timing length, so as to update the metadata information in the second access client; and in a second method, an IO access request forwarding counter is set so as to access, after the second access client forwards a pre-designed number of IO read/write requests, the metadata storage node to update the metadata information.

In some exemplary embodiments, before distributed storage nodes are accessed by means of the plurality of first virtual sub-clients, the method further includes: connections are established between the plurality of first virtual sub-clients and the distributed storage nodes respectively, wherein the connections are established by means of metadata information, and wherein the metadata information is acquired by a second access client from a metadata storage node.

It can be understood that, as shown in Fig. 5, in step S501, a connection between the second virtual sub-client and the metadata storage node is first established; in step S502, metadata information is acquired; and in step S503, connections are established between the first virtual sub-clients and distributed storage nodes. Specifically, the metadata information includes current cluster information and data distribution information about the distributed storage cluster, wherein the current cluster information includes a storage server list, data partition information, an address mapping relationship (or algorithm), etc. Connections, such as NVMe-oF connections as shown in Fig. 5, between the first virtual sub-clients and the distributed storage nodes may be established based on the acquired metadata information, and the first virtual sub-clients may forward a read/write request to the distributed storage nodes via the connections. It should be noted that the connection is preferably an NVMe-oF connection.

In some exemplary embodiments, distributed storage nodes are accessed by means of the plurality of first virtual sub-clients, includes: a read/write request sent by a block device is parsed by the second access client, so as to obtain a target address; a target node corresponding to the target address is determined by using an address mapping algorithm; and the read/write request is sent to the target node, wherein the read/write request is sent by means of a first virtual sub-client connected to the target node.

That is, the first virtual sub-client connected to the target node sends the read/write request to the target node, so that the target node performs the read/write operation indicated by the read/write request. It should be noted that, the target address is used for indicating the address of a target node among the plurality of distributed storage nodes. Further, for each of the plurality of first virtual sub-clients, in a case where it is determined that the target address is an address of a distributed storage node (i.e. the target node) connected to each of the first virtual sub-clients, each of the first virtual sub-clients sends the read/write request to the target node, and the forwarding operations of the plurality of first virtual sub-clients may be performed concurrently.

In some exemplary embodiments, a target node corresponding to the target address is determined using an address mapping algorithm, includes: a hash value corresponding to the target address is determined using the address mapping algorithm; and the target node corresponding to the hash value is determined according to metadata information, wherein the metadata information is used for indicating a correlation between the hash value and the target node.

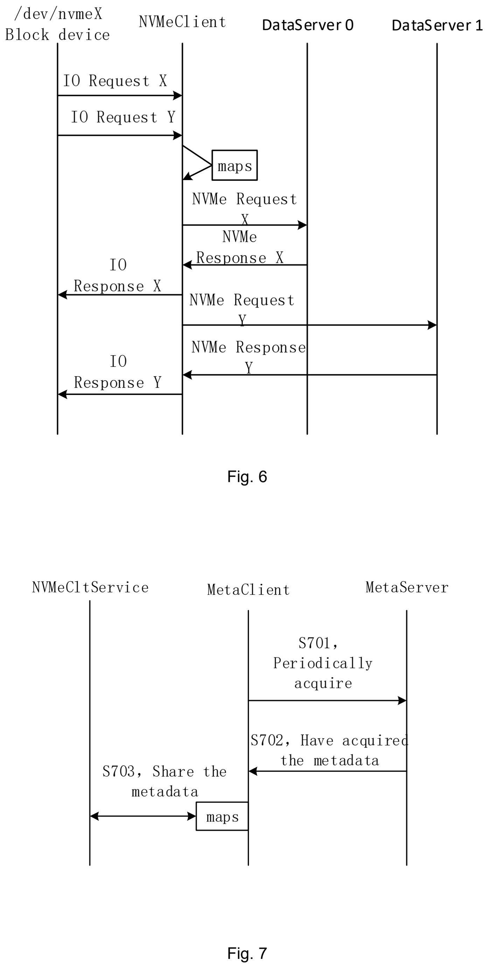

It can be understood that the block device sends the read/write request to the second access client, and the second access client parses from the read/write request a target address of a target node to which the read/write request needs to be forwarded, wherein the target address includes a Logical Block Address (LBA) and length information. The metadata information acquired by the second virtual sub-client synchronizes the kernel mode part of the second access client by means of a maps mechanism. Then, the second access client calculates a hash value corresponding to the target address according to the target address and the address mapping algorithm, and determines a target node corresponding to the read-write request from the metadata information based on the hash value. Preferably, the address mapping algorithm may be a Hash algorithm. For example, as shown in Fig. 6, the block device sends IO requests X and Y (equivalent to the IO read/write requests in the foregoing embodiments), determines target nodes DataServer0 and DataServer1 respectively corresponding to the IO requests X and Y based on the maps mechanism and the address mapping algorithm, forwards the IO read/write requests to the obtained target nodes, and finally obtains IO responses X and Y of the DataServer0 and DataServer1 to the IO requests.

Optionally, the read/write request is sent to the target node, includes: a server corresponding to the target distributed storage node (i.e. the target node) is determined, wherein the server is only connected to the target distributed storage node, or the server is connected to a plurality of distributed storage nodes; and the server receives the read/write request sent by the first virtual sub-clients, and forwards the read/write request to the target distributed storage node.

In some exemplary embodiments, after the read/write request is sent to the target node, the method further includes: a response result fed back by a response node is received, wherein the response result is a response result fed back by the response node based on the read/write request, and the response node includes one of the following: a target node and an actual node, wherein the actual node is a node to which the read/write request actually belongs in a case where the read/write request does not belong to the target node; the response result is parsed to obtain a response address of the response result; and in a case where the response address is different from the target address, a metadata storage node is accessed at a moment next to a current moment, so as to acquire latest metadata information in the metadata storage node.

Further, in a case that the response address is different from the target address, the second virtual sub-client is instructed by the second access client to access the metadata storage node at the moment following the current moment, so as to acquire latest metadata information in the metadata storage node, wherein a time difference between the current moment and the moment following the current moment is less than a preset threshold, and the second virtual sub-client is a second virtual sub-client determined by using a user mode program included in the second access client.

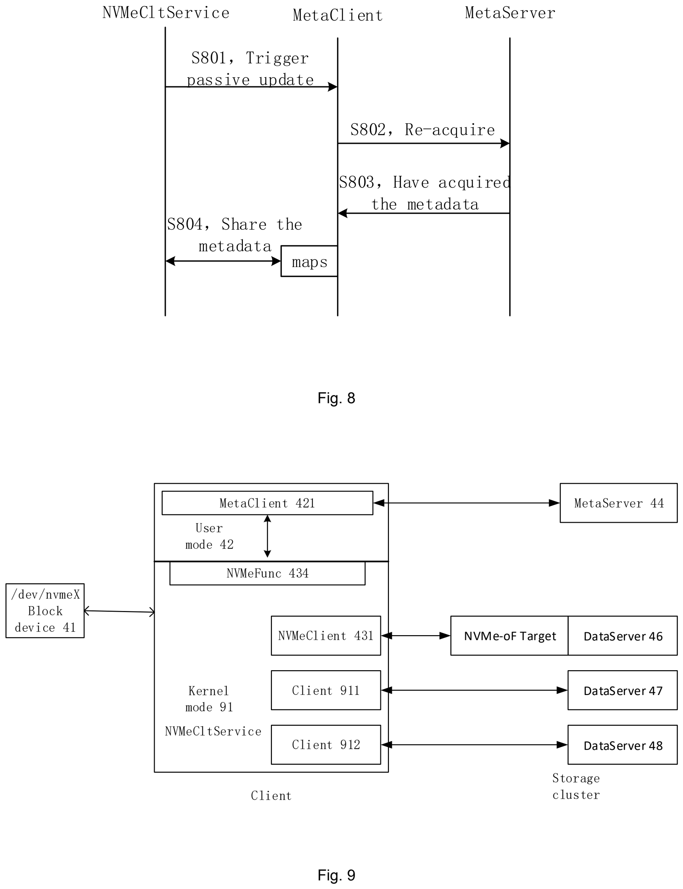

It can be understood that, the second access client periodically updates the metadata information, that is, the metadata information of the metadata storage node is periodically acquired by the second virtual sub-client in a manner such as a timer mentioned in the foregoing embodiments, this is an active update scheme. As shown in Fig. 7, specifically, metadata information in a metadata storage node (equivalent to the metadata server in Fig. 7) is actively acquired by a second virtual sub-client (equivalent to the metadata client in Fig. 7), and is shared with an NVMe client service in a kernel mode by means of a maps mechanism. In addition, further included is a passive update scheme, specifically including: a received IO response result fed back by a distributed storage node is parsed to obtain a response address, and in a case where the response address is the same as a target address indicated by an IO read/write request corresponding to the response result, it is determined that the response node is the target node; and in a case where the response address is different from a target address indicated by an IO read/write request corresponding to the response result, it is determined that the response node is an actual node, and it is determined that the current metadata information needs to be updated, thereby triggering the passive update process. As shown in Fig. 8, the kernel mode program notifies the second virtual sub-client that the metadata information needs to be updated immediately, and then the second virtual sub-client acquires the metadata information of the metadata storage node at the moment following the current moment.

In some exemplary embodiments, the plurality of first virtual sub-clients include at least one of: a plurality of first virtual sub-clients determined based on a first data transfer protocol; one first virtual sub-client determined based on the first data transfer protocol and a plurality of third virtual sub-clients determined based on a second data transfer protocol.

As shown in Fig. 9, the second access client may include another kernel mode program 91, including a first virtual sub-client and two or more third virtual sub-clients (equivalent to Clients 911 and 912 in Fig. 9). The first virtual sub-clients are based on a first data transfer protocol, preferably the NVMe protocol, and the third virtual sub-clients are based on a second data transfer protocol, which is a self-defined data transfer protocol.

In some exemplary embodiments, the read/write request is sent to the target node, includes: in a case where the virtual sub-clients are the third virtual sub-clients, the read/write request is transmitted to the third virtual sub-clients via the first virtual sub-clients; and the read/write request is converted into a read/write request based on the second data transfer protocol by means of the third virtual sub-clients, and the read/write request based on the second data transfer protocol is sent to the target node. The third virtual client assists the first virtual client in achieving higher read/write efficiency.

It can be understood that, in a case where the second access client adopts the kernel mode 91, when the IO read/write request needs to be sent by the third virtual sub-client, the first virtual sub-client needs to transfer the IO read/write request to the third virtual sub-client, and the third virtual sub-client converts same into a read/write request based on the second data transfer protocol. When the second access client initially establishes a connection with the distributed storage node, an underlying network channel based on a self-defined data transfer protocol is established between the third virtual sub-client and the distributed storage node, and then the read/write request based on the second data transfer protocol is sent to the target node via the underlying network channel.

The node access method is further described in combination with the following embodiments.

The emergence of the NVMe protocol greatly improves access performance of a storage device, and an NVMe component becomes a default kernel module of a Linux system. The embodiments of the present disclosure propose a method for optimizing an NVMe client based on a kernel extension technology (not limited to the eBPF technology), and proposes an innovative modification solution for the NVMe client, implementing multi-link concurrent and efficient access to a distributed storage cluster, and solving the current performance bottleneck of remote access of an NVMe client to a distributed storage system.

The new kernel extension technology represented by the eBPF provides a method for controlling and modifying the running of a kernel module for non-kernel developers, An objective of the embodiments of the present disclosure is to inject customized logic into an NVMe kernel module using an eBPF mechanism, so that the NVMe client can promptly acquire and update distributed storage cluster metadata and storage space distribution information, then, the target storage node to which the data belongs is calculated according to the target address of the IO request, and finally, the target storage node directly completes the IO read/write operation. The solution provided in the embodiments of the present disclosure has the following advantages: 1) it enables the NVMe client to directly access a target storage node, thereby avoiding the forwarding overhead of a single proxy service and effectively reducing data read/write latency; 2) the NVMe client accesses a plurality of storage nodes simultaneously, thereby avoiding single-link performance bottlenecks and significantly improving the overall read/write performance of the storage system; and 3) customized code is injected into the NVMe client module using the kernel extension technology, without requiring compilation or modification of kernel modules, thus avoiding binding to the OS kernel, and without requiring modification of I/O interfaces of upper-layer applications, making it applicable to various application scenarios.

Specifically, in the embodiments of the present disclosure, the distributed storage client function is injected into the NVMe client workflow by means of the kernel extension technology, so that connections can be established between the NVMe client and all the nodes of the storage cluster. As shown in Fig. 3, the client simultaneously maintains two networks of a control plane and a data plane. The control plane network is connected to a MetaServer to acquire cluster metadata information, and has low requirements for network bandwidth and latency. The data plane network is connected to multiple storage DataServers, bears the NVMe-oF protocol, and completes functions, such as remote data read/write.

Optionally, when the storage cluster has an excessive size, a plurality of data servers are supported to share the same data link, and a storage server accessed by the client completes small-scale proxy forwarding, thereby preventing the client from maintaining a large number of concurrent links.

Further, in the embodiments of the present disclosure, as shown in Fig. 4, a schematic diagram consists of the NVMe clients and the servers, and specifically include: a block device 41; a user mode 42, wherein the user mode 42 includes a MetaClient 421 (equivalent to the second virtual sub-client in the described embodiments), and the MetaClient 421 is connected to a MetaServer; and a kernel mode NVMeCltService 43, wherein the kernel mode 43 includes NVMeClients 431, 432 and 433 (equivalent to the first virtual sub-clients in the described embodiments), and the NVMeClients 431, 432 and 433 are respectively connected to the DataServers 46, 47 and 48 via the NVMeTargets.

A connection is established between the MetaClient and the storage cluster, so that the latest cluster state and data distribution information can be acquired in time, and synchronized to the kernel mode NVMecltService module using a shared maps mechanism. By taking a distributed storage project Ceph as an example, given the cluster's PG list and OSD grouping information, the OSD server where the target address is located can be determined according to an access target address LBA using a fixed Hash algorithm. Therefore, by writing the PG and OSD list information of the Ceph cluster into a maps table and enabling the client service to implement a Hash computation interface, the routing computation capability of the Ceph cluster can be achieved.

The NVMeCltService further includes a user injects code NVMeFunc 434, the NVMeFunc modifies a read/write process of a kernel NVMe module, and a plurality of NVMeClient modules (i.e. the NVMeClients 431-433 in Fig. 4; however, Fig. 4 is merely an example, that is, the number of NVMeClients is not limited to three as shown in Fig. 4, and there may be more NVMeClients) is managed to complete the IO operation. Each data storage server runs an NVMe-oF Target service to register the same resources such as Subsystem and Namespace. The NVMeClients and the NVMe-oF Targets are connected on a one-to-one basis, and all clients access the same global logic storage volume, return information of the same global logic storage volume to the kernal, and map same to an NVMe logic block device (equivalent to the block device 41 in Fig. 4).

The read/write operation of a local block device (equivalent to the block device 41 in Fig. 4) triggers an NVMe request, an NVMeCltService parses to obtain the requested target address, a server where the target address is located is calculated according to data distribution information, a corresponding NVMeClient is selected to send the read/write request to the target data server, and after the IO operation is completed, the NVMeClient receives an IO response and returns same to an NVMe drive interface of the kernel via the same NVMe session.

Further, as shown in Fig. 5, a specific connection setup process includes the following steps:
step S501: the client establishes a connection with the MetaServer via a connect command;
step S502: metadata information is acquired; and
step S503: an NVMe-oF connection is established with the DataServe.

Specifically, the standard nvme client establishes a connection with the server via the following commands:
nvme connect -t nettype -n "nqn.XX.yy.mm" -a IPAddr -s port.

The nvme client in the embodiments of the present disclosure supports simultaneous establishment of connections with a plurality of nodes, and the command format is as follows:
nvme connect -t nettype -n "nqn.XX.yy.mm"-m MetaSvr:port.

The "-m MetaSvr:port" specifies the address and port information of the MetaServer, as shown in Fig. 5. The client establishes a connection with a MetaServer via a connect command, acquires current cluster information, including a storage server list, data partition information, an address mapping relationship (or algorithm), etc., and the client establishes NVMe-oF connections with a plurality of storage service nodes according to the acquired storage server information. Each storage server needs to start an NVMe-oF Target service, register the same Target resource, and support request routing and forwarding. When the storage server finds that the request address does not belong to the present service, the storage server can forward the request to a real destination server.

Further, access of a service application to a logical block device triggers a read/write process of an NVMe client. As shown in Fig. 6, the process includes:
1) the NVMeClient firstly acquires a target address from a read/write request (such as an IO request X and an IO request Y in Fig. 6), and obtains logical block address (LBA) and length (Len) information by parsing the request message from the NVMe; and
2) according to cluster composition information, such as a cluster partition table and a data server list, buffered in the maps, a storage server DataSever where the LBA address is located is calculated using a Hash algorithm, an NVMe client object connected to the server is selected, and is assembled into a request message of an NVMe-oF protocol type and then sent to a target node, wherein the request message carries information such as a read/write LBA, Len, an operation type and a session number. For example, in Fig. 6, based on the maps mechanism, the NVMe request X is sent to the DataSever0, and the NVMe request Y is sent to the DataSever1.
3) after the server finishes reading and writing, a response message of the NVMe-oF protocol type is constructed, and returned to the NVMeClient, such as the NVMe response X and NVMe response Y in Fig. 5; and
4) the NVMeClient reuses the same NVMe link ID to return an IO response result to the application layer, such as the IO response X and IO response Y in Fig. 6, and the NVMe link ID is an NVMe session ID created and used by the operating system layer, and is used for the operating system layer to identify the NVMe link.

Further, the metadata update process is as follows, including two update modes, i.e., active update mode and passive update mode, specifically:
the MetaClient among the clients is responsible for reading the latest cluster metadata information from the cluster metadata server and storing same in a DataMap table, and the user-mode MetaClient module and the kernel-mode NVMecltService realize data exchange by sharing the DataMap. The MetaClient supports the two active update and passive update modes. The active update means that the client periodically acquires the cluster metadata. As shown in Fig. 7, the following steps are included:
step S701: a second virtual sub-client periodically acquires metadata information from a metadata storage node;
step S702: the second virtual sub-client have acquired the metadata information; and
step S703: the user mode in which the second virtual sub-client is located shares the metadata information with the kernel mode by means of a maps mechanism.

The passive update means that when it is determined that the source address of the response message (equivalent to the response result in the above embodiments) does not match the target server of the request message, the client NVMecltService triggers a passive update process of the metadata, and notifies the MetaClient to re-acquire the cluster metadata, wherein the DataSever supports to forward a request that the target address is not itself to the correct server. As shown in Fig. 8, the specific process includes:
step S801: the kernel mode triggers a passive update of metadata based on the fact that a source address of a response result does not match a target node of an IO read/write request;
step S802: the second virtual sub-client acquires metadata information from a metadata storage node at the moment following the current moment;
step S803: the second virtual sub-client have acquired the metadata information; and
step S804: the user mode in which the second virtual sub-client is located shares the metadata information with the kernel mode by means of a maps mechanism.

Optionally, there is another alternative solution for the data plane link in the embodiments of the present disclosure. As shown in Fig. 9, only one complete NVMe-oF connection is created between the client and the storage cluster, and other connections use a self-defined data transfer protocol. The client in the alternative solution further includes clients 911 and 912 (equivalent to the third virtual sub-clients in the described embodiments), data is transmitted via the underlying network channels (i.e. not via the NVMe-oF Targets), the clients convert the NVMe request into a customized internal IO request and send to the target storage server, the internal IO response is encapsulated as a standard NVMe response and returned to the NVMecltService, that is, the client is connected to one NVMe-oF Target server via one NVMe-oF connection, but a plurality of underlying network channels are supported to transmit data. The alternative solution helps to achieve higher IO performance.

In conclusion, the NVMe client command interface of the embodiments of the present disclosure requires specifying the IP and port of the metadata server, which has distinct characteristics. Furthermore, the client in the embodiments of the present disclosure establishes connection channels with the metadata server and the storage servers in the storage cluster, exhibiting highly distinctive network features.

Further, the embodiments of the present disclosure extend the NVMe client to support multi-link concurrent access to the storage cluster, thereby overcoming the current single-client performance bottleneck in distributed storage clusters, and also addressing the inefficiency of customized clients in accessing kernel I/O drivers. The modification of the NVMe client using the kernel extension mechanism does not require direct modifications to kernel modules, making the implementation and deployment of the solution more flexible and eliminating the need for binding with the kernel that exists in existing implementations.

The present embodiment further provides a node access apparatus, which is configured to implement the described embodiments and preferred embodiments, and what has been described will not be described again. As used below, the term "module" may implement a combination of software and/or hardware of predetermined functions. Although the device described in the following embodiments is preferably implemented in software, implementation in hardware or a combination of software and hardware is also possible and could have been conceived.

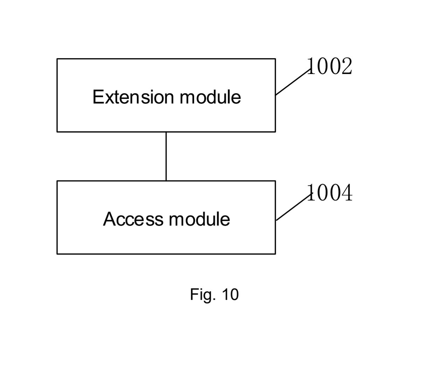

Fig. 10 is a structural block diagram of a node access apparatus according to embodiments of the present disclosure. As shown in Fig. 10, the node access apparatus includes:
an extension module 1002, configured to extend a first access client by using kernel extension technology to obtain a second access client, wherein the second access client includes a kernel mode program, which is used for determining a plurality of first virtual sub-clients corresponding to the second access client; and
an access module 1004, configured to access distributed storage nodes by means of the plurality of first virtual sub-clients.

According to the embodiments of the present disclosure, by means of the described steps, a first access client is extended using kernel extension technology to obtain a second access client, wherein the second access client includes a kernel mode program which is used to determine a plurality of first virtual sub-clients corresponding to the second access client; and distributed storage nodes are accessed by the plurality of first virtual sub-clients. That is to say, the first access client is extended using the kernel extension technology to obtain the second access client capable of accessing the distributed storage nodes by the plurality of first virtual sub-clients, thereby solving the technical problem that existing NVMe clients cannot concurrently access the plurality of storage nodes in the distributed storage. The technical effect of concurrent access to distributed storage nodes is achieved.

In some exemplary embodiments, the access module 1004 is further configured to, in a case where the second access client further includes a user mode program, determine a second virtual sub-client corresponding to the second access client according to the user mode program; and access a metadata storage node by means of the second virtual sub-client, so as to acquire metadata information in the metadata storage node.

In some exemplary embodiments, the access module 1004 is further configured to set a timer for the second virtual sub-client; and to acquire metadata information in the metadata storage node within a timing length according to the timing length of the timer.

In some exemplary embodiments, the access module 1004 is further configured to respectively establish connections between the plurality of first virtual sub-clients and the distributed storage nodes respectively, wherein the connections are established by means of metadata information, and wherein the metadata information is acquired by a second access client from a metadata storage node.

In some exemplary embodiments, the access module 1004 is further configured to parse, by the second access client, a read/write request sent by a block device, so as to obtain a target address; determine a target node corresponding to the target address by using an address mapping algorithm; and send the read/write request to the target node, wherein the read/write request is sent by means of a first virtual sub-client connected to the target node.

In some exemplary embodiments, the access module 1004 is further configured to determine, by means of the address mapping algorithm, a hash value corresponding to the target address; and determine the target node corresponding to the hash value according to metadata information, wherein the metadata information is used for indicating a correlation between the hash value and the target node.

In some exemplary embodiments, the access module 1004 is further configured to receive a response result fed back by a response node, wherein the response result is a response result fed back by the response node based on the read/write request, and the response node includes one of the following: a target node and an actual node, wherein the actual node is a node to which the read/write request actually belongs in a case where the read/write request does not belong to the target node; parse the response result to obtain a response address of the response result; and in a case where the response address is different from the target address, access a metadata storage node at a moment next to a current moment to acquire latest metadata information in the metadata storage node.

In some exemplary embodiments, the extension module 1002 is further configured that the plurality of first virtual sub-clients include at least one of the following: a plurality of first virtual sub-clients determined based on a first data transfer protocol; one first virtual sub-client determined based on the first data transfer protocol and a plurality of third virtual sub-clients determined based on a second data transfer protocol.

In some exemplary embodiments, the access module 1004 is further configured to transmit, in a case where the virtual sub-clients are the third virtual sub-clients, the read/write request to the third virtual sub-clients via the first virtual sub-clients; and convert the read/write request into a read/write request based on the second data transfer protocol by means of the third virtual sub-clients, and send the read/write request based on the second data transfer protocol to the target node.

From the description of the described embodiments, a person skilled in the art would have been able to clearly understand that the methods in the described embodiments may be implemented by using software and necessary general hardware platforms, and of course may also be implemented using hardware, but in many cases, the former is a better embodiment. On the basis of such understanding, the portion of the technical solution of the present disclosure that contributes in essence or to the related art may be embodied in the form of a software product stored in a readable storage medium (such as an ROM/RAM, a magnetic disk and an optical disc); and the storage medium includes several instructions to cause a terminal device (which may be a mobile phone, a computer, a server or a network device, etc.) to perform the method according to the various embodiments of the present disclosure.

In some exemplary embodiments, the computer-readable storage medium may include, but is not limited to: various media that can store a computer program, such as a USB flash drive, a Read-Only Memory (ROM), a Random Access Memory (RAM), a removable hard disk, a magnetic disk, or an optical disc.

For specific examples in the present embodiment, reference can be made to the examples described in the described embodiments and exemplary embodiments, and thus they will not be repeated again in the present embodiment

Embodiments of the present disclosure further provide an electronic apparatus, including a memory and a processor; wherein the memory stores a computer program, and the processor is configured to execute the computer program to implement the steps in any one of the method embodiments.

Optionally, in the present embodiment, the processor may be configured to execute the following step by means of the computer program:
S1. a first access client is extended using kernel extension technology to obtain a second access client, wherein the second access client includes a kernel mode program which is used to determine a plurality of first virtual sub-clients corresponding to the second access client; and
S2. distributed storage nodes are accessed through the plurality of first virtual sub-clients.

In some exemplary embodiments, the electronic apparatus can further include a transmission device and an input/output device, wherein the transmission device is connected to the processor, and the input/output device is connected to the processor.

Optionally, in this embodiment, the electronic apparatus may be further configured to use a computer program to implement the steps S1 in which a first access client is extended by using kernel extension technology to obtain a second access client, wherein the second access client includes a kernel mode program which is used to determine a plurality of first virtual sub-clients corresponding to the second access client; and S2 in which distributed storage nodes are accessed by means of the plurality of first virtual sub-clients.

For specific examples in this embodiment, reference can be made to the examples described in the described embodiments and exemplary embodiments, and thus they will not be repeated again in the present embodiment

Obviously, a person skilled in the art will understand that various modules or various steps in some embodiments of the present disclosure can be implemented by means of a general computing device, can be integrated on one single computing device, or distributed over a network consisting of a plurality of computing devices, and the various modules or various steps can be implemented by means of program codes executable by a computing device, and thus can be stored in a storage device and executed by a computing device, and in some cases, the shown or described steps may be executed in a sequence different from that shown herein, or they are manufactured into integrated circuit modules, or multiple modules or steps therein are manufactured into a single integrated circuit module. Thus, the present disclosure is not limited to any specific hardware and software combinations.

The content above merely relates to preferred embodiments of the present disclosure, and is not intended to limit the present disclosure. For a person skilled in the art, the present disclosure may have various modifications and changes. Any modifications, equivalent replacements, improvements, etc. made within the principle of the present disclosure shall all fall within the scope of protection of the present disclosure.

## Claims

1. A node access method, comprising:
extending a first access client by using kernel extension technology to obtain a second access client, wherein the second access client comprises a kernel mode program which is used for determining a plurality of first virtual sub-clients corresponding to the second access client; and
accessing distributed storage nodes by means of the plurality of first virtual sub-clients.

2. The node access method according to claim 1, wherein before accessing distributed storage nodes by means of the plurality of first virtual sub-clients, the method further comprises:
in a case where the second access client further comprises a user mode program, determining a second virtual sub-client corresponding to the second access client according to the user mode program; and
accessing a metadata storage node by means of the second virtual sub-client to acquire metadata information in the metadata storage node.

3. The node access method according to claim 2, wherein accessing metadata storage nodes by means of the second virtual sub-client to acquire metadata information in the metadata storage node comprises:
setting a timer for the second virtual sub-client; and
acquiring metadata information in the metadata storage node within a timing length according to the timing length of the timer.

4. The node access method according to claim 1, wherein before accessing distributed storage nodes by means of the plurality of first virtual sub-clients, the method further comprises:
establishing connections between the plurality of first virtual sub-clients and the distributed storage nodes respectively, wherein the connections are established by means of metadata information, and wherein the metadata information is acquired by a second access client from a metadata storage node.

5. The node access method according to claim 1, wherein accessing distributed storage nodes by means of the plurality of first virtual sub-clients comprises:
parsing, by the second accessing client, a read/write request sent by a block device to obtain a target address;
determining a target node corresponding to the target address by using an address mapping algorithm; and
sending the read/write request to the target node, wherein the read/write request is sent by means of a first virtual sub-client connected to the target node.

6. The node access method according to claim 5, wherein after sending the read/write request to the target node, the method further comprises:
receiving a response result fed back by a response node, wherein the response result is a response result fed back by the response node based on the read/write request, and the response node comprises one of the following: a target node and an actual node, wherein the actual node is a node to which the read/write request actually belongs in a case where the read/write request does not belong to the target node;
parsing the response result to obtain a response address of the response result; and
in a case where the response address is different from the target address, accessing a metadata storage node at a moment next to a current moment, so as to acquire latest metadata information in the metadata storage node.

7. The node access method according to claim 5, comprising:
the plurality of first virtual sub-clients comprise at least one of: a plurality of first virtual sub-clients determined based on a first data transfer protocol; one first virtual sub-client determined based on the first data transfer protocol, and a plurality of third virtual sub-clients determined based on a second data transfer protocol.

8. The node access method according to claim 7, wherein sending the read/write request to the target node comprises:
in a case that the virtual sub-clients are the third virtual sub-clients, transmitting the read/write request to the third virtual sub-clients via the first virtual sub-clients; and
converting, by means of the third virtual sub-clients, the read/write request into a read/write request based on the second data transfer protocol, and sending the read/write request based on the second data transfer protocol to the target node.

9. A node access apparatus, comprising:
an extension module, configured to extend a first access client by using kernel extension technology to obtain a second access client, wherein the second access client comprises a kernel mode program which is used for determining a plurality of first virtual sub-clients corresponding to the second access client; and
an access module, configured to access distributed storage nodes by means of the plurality of first virtual sub-clients.

10. An electronic apparatus, comprising a memory and a processor, wherein the memory stores a computer program, and the processor is configured to execute the computer program so as to implement the method according to any one of claims 1 to 8.
